# EUROPEAN PATENT SPECIFICATION

(11) **EP 2 647 094 B1**
(45) Date of publication and mention of the grant of the patent: **01.04.2015**
(21) Application number: 10860123.8
(22) Date of filing: 30.11.2010
(51) Int. Cl.: H02G 3/08, H02G 3/22

(54) **GROMMET FOR A FLEXIBLE CONDUIT IN AN INSTALLATION BOX**
TÜLLE FÜR EINE FLEXIBLE LEITUNG IN EINEM INSTALLATIONSKASTEN
PASSE-CÂBLE POUR CONDUIT FLEXIBLE DANS UN BOÎTIER D'INSTALLATION

(43) Date of publication of application: 09.10.2013
(73) Proprietor: Schneider Electric Industries SAS, 92500 Rueil-Malmaison (FR)
(72) Inventor: BRUNBERG, Magnus, S-611 50 Nyköping (SE); WÄNGSTRE, Håkan, S-611 37 Nyköping (SE); SUNDIN, Lars, S-613 37 Oxelösund (SE)
(74) Representative: Groth & Co. KB
(86) International application number: PCT/SE2010/051315
(87) International publication number: WO 2012/074443

(56) References cited:
- EP-A1- 1 248 341
- EP-A1- 1 489 713
- EP-A1- 1 489 713
- EP-A1- 2 028 740
- WO-A1-97/33115
- DE-U- 1 925 880
- US-B1- 6 521 833

## Description

### Technical field

The present invention relates to a grommet for an installation box of the kind defined in the preamble of claim 1. In particular, the invention relates to a grommet in an installation box which grommet is interacting with a flexible conduit connected to the installation box.

### Background of the invention

Installation boxes are used in the installation of electric devices in buildings so as to enable the provision of an insulated or isolated cavity for connection points and the connection of different types of electrical contact devices and electric sockets.

Surface mounted installation boxes are on its side provided with a box entrance through which a conduit is passing. Between this conduit and the box there is a grommet which serves for a sealing between the conduit and the box. Normally these conduits are designed with a smooth surface which easily can be sealed towards the box. The same type of sealing has been used also for flexible conduits with the result of poor sealing qualities and poor attachment forces in relation to the entrance in the installation box.

EP 1489713 discloses a grommet which is provided with tree different sealings for pipes of different diameters. The grommet and its sealings are adapted only to rigid pipes having a smooth outer surface.

### Object of the invention

The object of the present invention is to provide a solution to the aforesaid problems with the aid of an improved grommet of the kind described.

A further object of the invention is to provide a snap fit in combination with good sealing properties for flexible conduits in grommets for installation boxes and especially for surface mounted boxes.

### Summary of the invention

This object is achieved by the present invention as defined in the independent claim 1. Suitable embodiments of the present invention are made apparent in the dependent claims. Embodiments of the invention serves for a snap fit and a sealed attachment to a flexible conduit of one dimension and the same embodiment can be alternatively be used for sealed attachment to smooth surface conduits for two other dimensions as well as being used as closure of a conduit entrance to an installation box. The sealing properties of the invention serve for an ip55 level of sealing.

The invention relates to a grommet for attachment to an installation box for electric cables. The grommet comprising a cylindrical ring shaped body with an outer surface provided with a groove having a size corresponding with the size of an edge of a circular hole in the installation box for mounting the grommet into said hole. The ring shaped body is also provided with an inner surface having a flexible sealing member extending towards a symmetry axis of the body from the inner surface and adapted to attach an outer surface of a corrugated flexible installation conduit inserted into the grommet. The inner surface of the grommet is in combination with the sealing member provided with a snapping member distributed at least partly along the periphery of the inner surface. This arrangement serves for a snap fit and a tight seal of the conduit in the installation box. The snapping member can be divided into several separate members acting simultaneously towards the conduit.

In an embodiment of the invention the snapping member is made of flexible elastic material. In this embodiment of the invention a coaction between a conduit having an outer surface made of non elastic material and the snapping member can take place.

In an embodiment of the invention the snapping member is located at an axial distance from the flexible sealing member equal to the axial distance between one wave crest and one wave trough of said corrugated flexible installation conduit. Thus the axial distance corresponds to the corrugated surface of the conduit.

In an embodiment of the invention the said axial distance is equal to the axial distance between one wave crest and the closest wave though. This embodiment indicates the smallest possible axial distance between the snapping member and the sealing member of the grommet.

In an embodiment of the invention the snapping member is located axially inside the location of the flexible sealing member of the grommet when the grommet is mounted in the installation box. This enables a sealing from the outside also of the snapping member.

In an embodiment of the invention the inner surface of the body is provided with a first flexible conical sealing ring directed towards the inner of the box when mounted in the box which first flexible conical sealing ring is connected to a first body step of the grommet. By this embodiment it is possible sealingly attach a smaller diameter conduit preferably with a smooth outer surface and to detach this sealing ring if not in use by this first step.

In an embodiment of the invention the inner surface of the body is provided with a second flexible conical sealing ring directed towards the inner of the box when mounted in the box which second flexible conical sealing ring is connected to a second body step of the grommet which second flexible conical sealing ring has a smaller diameter than the first flexible conical sealing ring and which second body step has a smaller diameter than the first body step. This additionally conical sealing ring makes it possible to attach an even smaller diameter conduit to the same grommet and gives a user the possibility with the same grommet to choose one of three conduit diameters for connection to an installation box.

In an embodiment of the invention the body of the grommet is provided with an end closure attached to a body step of the grommet. This serves for an additional use of the grommet namely to close the box entrance without attaching any conduit at all.

In an embodiment of the invention the body step is provided with a detachment groove on the outer surface of the body. Such a groove makes it easy to remove parts of the grommet not needed only by cutting off the parts by a knife. Thus this serves for an easy adaption of the grommet to the actual mounting situation.

In an embodiment of the invention the outer surface of the inner end of the body is formed with a conical shaped surface part for an easy attachment of the grommet into the hole in the installation box. When mounting the grommet these inclined surfaces slides into the box through the circular hole and the inner end of the grommet is being compressed while sliding through the hole. Thus this serves for an easy mounting of the grommet in the installation box.

### Brief description of the drawings

The invention will now be described in more detail with reference to an exemplifying embodiment thereof and also with reference to the accompanying drawings, in which
Fig. 1 is a perspective view of one embodiment of the present invention attached to one example of a surface mounted installation box into which a flexible conduit is attached;
Fig. 2 is a top view of the installation box in fig. 1;
Fig. 3 is a sectional view A - A as indicated in fig. 1 and containing two grommets of an embodiment of the invention;
Fig. 4 is an enlarged view from the encircled part in fig. 3;
Fig. 5 is a perspective inside view of an embodiment of the grommet according to the invention;
Fig. 6 is a perspective outside view of the grommet in fig. 5;
Fig. 7 is a top view of the grommet in figs. 5 and 6;
Fig. 8 is sectional view B - B as indicated in fig. 7; and
Fig. 9 is an enlarged part of the marked area in fig. 8.

### Detailed description of the invention

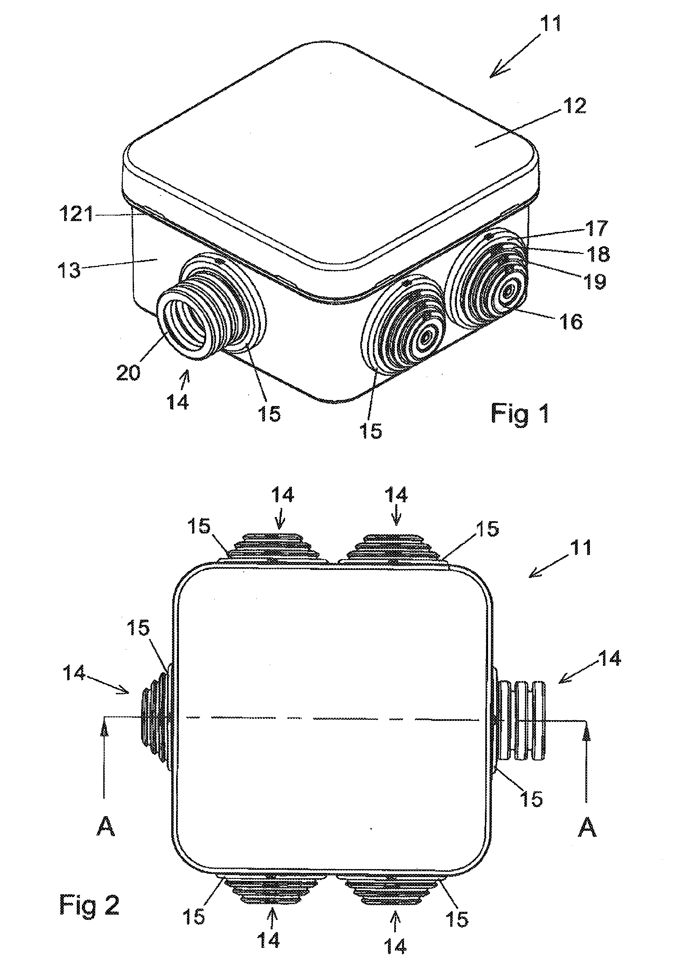

Figure 1 illustrates an installation box 11 which is of the surface mounted type. The box is provided with a top cover 12 partly overlapping its four flat sides 13 and arranged with form locking members 121. On the sides there are box entrances 14 arranged as holes in the sides of the box. In these holes a grommet 15 is mounted which grommet in the disclosed embodiment is provided with an end closure 16 in the centre of the grommet. The grommet is also provided with a concentrically first body step 17, a concentrically second body step 18 and a concentrically third body step 19 to which the end closure 16 is connected. Each of these body steps 17, 18, 19 is provided with a detachment groove in order to the outer parts of the grommet outside the respective groove. This design makes it possible to use the same grommet in four situations. Firstly as a complete cover of the box entrance; secondly as an entrance for a small diameter box conduit; thirdly as an entrance for a medium diameter box conduit; and lastly as an entrance for a large diameter box conduit. As is indicated in the figure each body step is provided with an indication of the actual conduit diameter for each body step. In the figure one of the disclosed inserted grommets 15 has been cut at the first body step providing for a corrugated flexible installation conduit 20 to be attached into the grommet 15.

Figure 2 illustrates a top view of the installation box 11 which is provided with six box entrances 14 each provided with a grommet 15. One of the grommets is cut to provide for the corrugated flexible installation conduit 20.

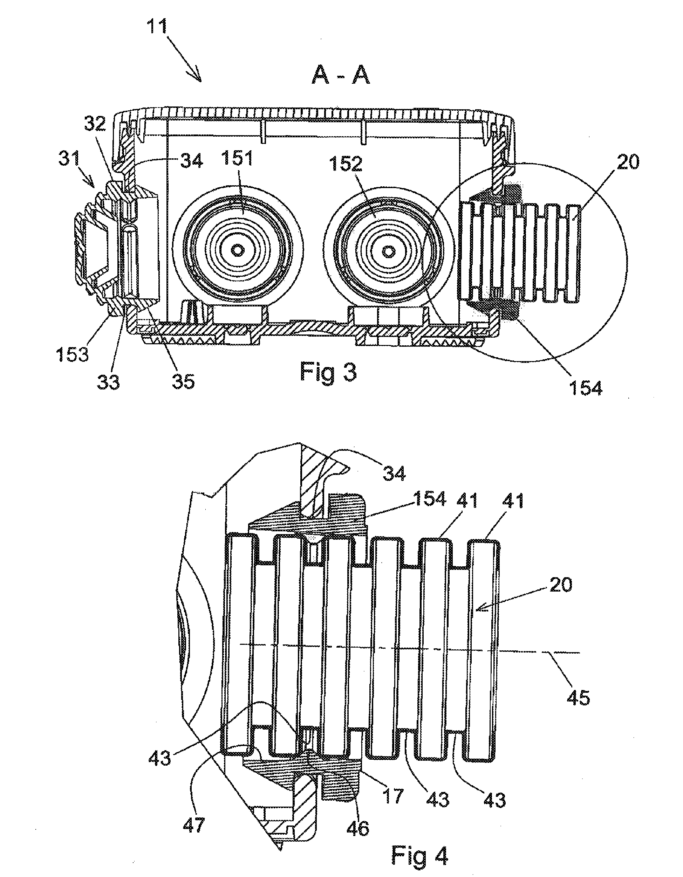

Figure 3 discloses the section A - A of the installation box 11 indicated in figure 2 in which view two grommets 151, 152 are disclosed from inside the box and two grommets 153, 154 are disclosed in section and of which one grommet 154 is being cut and provided with the corrugated flexible installation conduit 20. Each grommet is designed as a cylindrical ring shaped body 31 having an outer surface 32 provided with a groove 33. This groove corresponds in size to the size of the circular hole 34 in the box and its wall thickness. The outer surface 32 is also at its inner end formed with a conical shaped surface part 35 in order to easily mount the grommet 15 into the box hole 34.

Figure 4 disclose an enlarged view of a mounted corrugated flexible installation conduit 20 in the grommet 154. The conduit 20 is designed with parallel wave crests 41 each separated from each other by parallel wave troughs 43 along its longitudinal axis 45. The wave crests and the wave troughs have an essentially rectangular shape seen in this cross sectional view. Due to this shape of the wave crests 41 a smooth cylindrical outer surface is established on the conduit. The grommet 154 disclosed has been cut in a groove at its first body step 17 and has been inserted into the box hole 34. The conduit 20 has been inserted into the grommet 154 wherein a snapping member 46 located on an inner surface 47 of the grommet 154 cooperates with one wave trough 43 in a snapping action. This arrangement serves to provide an axial force holding the conduit in the installation box. The snapping member is in the disclosed embodiment divided into several parts along the inner periphery of the inner surface 47. Also continuous ring formed snapping members on the inner surface are covered by the invention.

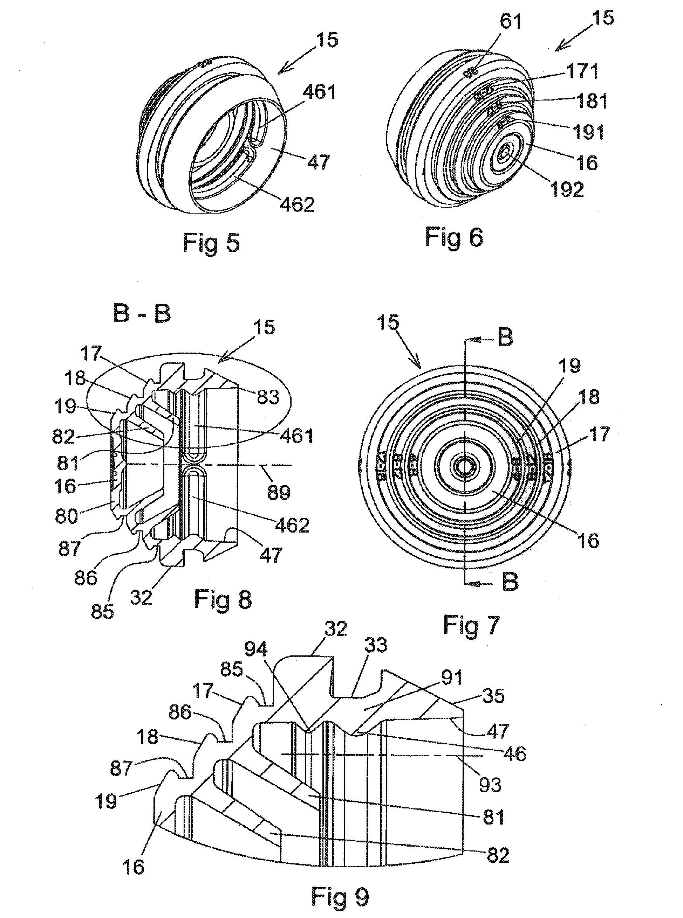

Figure 5 illustrates the inside of the grommet 15 in which two separate snapping members 461, 462 on the inner surface 47 is disclosed.

Figure 6 illustrates the outside of the grommet 15 having a grommet identification 61 for a conduit of the largest possible diameter, 20 mm, that can be used in the grommet, either as a corrugated flexible conduit or as a smooth surface conduit. The figure also illustrates three additional grommet identifications for three further diameter intervals, namely a first interval 171, in this embodiment 12-16 mm, a second interval 181, in this embodiment 8-12 mm and of a third interval 191, in this embodiment 4-8 mm. This third diameter interval 191 is used for the smallest conduits being sealed off against the grommet when a knob 192 in the end closure 16 is removed and the conduit is inserted in through the resulting hole. Thus, this arrangement of one size grommet serves for conduit attachment of a continuous range of diameter possibilities in the range of 4 - 16 mm together with a large conduit diameter of 20 mm.

Figure 7 illustrates that the body steps 17, 18, 19 of the grommet 15 are arranged concentrically around the end closure 16 in the center of the grommet.

Figure 8 illustrates the cross section indicated in figure 7. The figure discloses that the grommet 15 is designed as a cylindrical ring shaped body 80 with a symmetrical axis 89. The ring shaped body 80 is disclosing the outer surface 32 and the inner surface 47 with its two snapping members 461, 462. The inner surface is also provided with a first flexible conical sealing ring 81 which is at its largest diameter attached to the inner surface 47 and located symmetrically inside the first body step 17 and directed towards the inner end 83 of the grommet 15 with its smallest diameter. A second flexible conical sealing ring 82 which is at its largest diameter also attached to the inner surface 47 of the grommet 15 and located symmetrically inside the second body step 18 and also directed towards the inner end 83 of the grommet 15 with its smallest diameter. As is illustrated the second flexible conical sealing ring 82 is of a smaller diameter than the first flexible conical sealing ring 81 and also located outside said first sealing ring 81. The figure also shows in this cross section the end closure 16 which is disposed off when cutting is made in one of the detachment grooves 85, 86, 87 at the body steps 17, 18, 19.

Figure 9 disclose an enlarged view indicated in figure 8 showing the grommet body 91 having on its outer surface 32 the conical shaped surface part 35, the groove 33, the first body step 17 with its detachment groove 85, the second body step 18 with its detachment groove 86, the third body step 19 with its detachment groove 87 and to which third body step 19 the end closure 16 is attached. In the figure also the first flexible conical sealing ring 81 and the second flexible conical sealing ring 82 which are attached to the inner surface 47 is disclosed. On the inner surface 47 is the snapping member 46 located and directed radially towards a parallel axis 93 to the symmetrical axis of the grommet. On the inner surface located axially outside this snapping member 46 is a flexible sealing member 94 also directed radially towards the said parallel axis 93. This sealing member 94 is extending over the whole inner periphery of the inner surface. The axial distance between the snapping member 46 and the sealing member 94 in the grommet is equal to the axial distance between the center of one wave crest and the nearest wave trough of a corrugated flexible installation conduit to be attached into the grommet. This can also be seen in figure 4 where such a conduit is disclosed attached into the grommet and which sealing member is compressed by the outer surface of the actual wave crest. In the closest wave trough 43 to this wave crest in figure 4 the snapping member 46 is co acting for holding the conduit in the grommet.

The invention has been described with reference to one disclosed embodiment of the invention but other embodiments can be conceivable within the scope of the claims. For example the snapping member can consist of one, two three or four individual members. The sectioned profile of the snapping member and the sealing member can be varied and still provide an embodiment under the invention.

## Claims

1. A grommet (15) for attachment to an installation box (11) for electric cables, the grommet comprising a cylindrical ring shaped body (31) with an outer surface (32) provided with a groove (33) having a size corresponding with the size of an edge of a circular hole (34) in the installation box (11) for mounting the grommet (15) into said hole (34), and provided with an inner surface (47) having a flexible sealing member (94) extending towards a symmetry axis (89) of the body (31) from the inner surface (47) and adapted to attach an outer surface of a corrugated flexible installation conduit (20) inserted into the grommet (15), **characterized in** that the inner surface (47) of the grommet (15) is provided with a snapping member (46, 461, 462) distributed at least partly along the periphery of the inner surface (47).

2. Grommet according to claim 1, **characterized in** that the snapping member (46, 461, 462) is made of flexible elastic material.

3. Grommet according to any of the claims 1-2, **characterized in** that the snapping member (46, 461, 462) is located at an axial distance from the flexible sealing member (94) equal to the axial distance between one wave crest (41) and one wave trough (43) of said corrugated flexible installation conduit (20).

4. Grommet according to claim 3, **characterized in** that the said axial distance is equal to the axial distance between one wave crest (41) and the closest wave though (43).

5. Grommet according to any of the claims 1-4, **characterized in** that the snapping member (46, 461, 462) is located axially inside the location of the flexible sealing member (94) of the grommet when the grommet is mounted in the installation box.

6. Grommet according to any of the claims 1-5, **characterized in** that the inner surface (47) of the body (31) is provided with a first flexible conical sealing ring (81) directed towards the inner of the box when mounted in the box which first flexible conical sealing ring (81) is connected to a first body step (17) of the grommet.

7. Grommet according to claim 6, **characterized in** that the inner surface (47) of the body (31) is provided with a second flexible conical sealing ring (82) directed towards the inner of the box when mounted in the box which second flexible conical sealing ring (82) is connected to a second body step (18) of the grommet which second flexible conical sealing ring (82) has a smaller diameter than the first flexible conical sealing ring (81) and which second body step (18) has a smaller diameter than the first body step (17).

8. Grommet according to any of the claims 1-7, **characterized in** that the body (31) of the grommet is provided with an end closure (16) attached to a body step (17, 18, 19) of the grommet.

9. Grommet according to any of the claims 6-8, **characterized in** that the body step (17, 18, 19) is provided with a detachment groove (85, 86, 87) on the outer surface (32) of the body (31).

10. Grommet according to any of the claims 1-9, **characterized in** that the outer surface (32) of the inner end (83) of the body (31) is formed with a conical shaped surface part (35) for an easy attachment of the grommet into the hole in the installation box.

## Patentansprüche

1. Tülle (15) zum Anbringen an einer Installationsdose (11) für elektrische Kabel, wobei die Tülle einen zylindrischen, ringförmigen Körper (31) mit einer äußeren Oberfläche (32) umfasst, die mit einer Nut (33), deren Größe der Größe eines Rands eines kreisförmigen Lochs (34) in der Installationsdose (11) entspricht, um die Tülle (15) in dem Loch (34) zu montieren, sowie mit einer inneren Oberfläche (47) versehen ist, die ein flexibles Dichtungselement (94) hat, das sich von der inneren Oberfläche (47) zu einer Symmetrieachse (89) des Körpers (31) erstreckt und geeignet ist, eine äußere Oberfläche eines gewellten flexiblen Installationsrohrs (20), das in die Tülle (15) eingeführt ist, anzubringen, **dadurch gekennzeichnet, dass** die innere Oberfläche (47) der Tülle (15) mit einem Schnappelement (46, 461, 462) versehen ist, das mindestens teilweise entlang dem Umfang der inneren Oberfläche (47) verteilt ist.

2. Tülle nach Anspruch 1, **dadurch gekennzeichnet, dass** das Schnappelement (46, 461, 462) aus flexiblem elastischem Material hergestellt ist.

3. Tülle nach einem der Ansprüche 1 - 2, **dadurch gekennzeichnet, dass** das Schnappelement (46, 461, 462) in einem axialen Abstand vom flexiblen Dichtungselement (94) angeordnet ist, der gleich dem axialen Abstand zwischen einem Wellenkamm (41) und einem Wellental (43) des gewellten, flexiblen Installationsrohrs (20) ist.

4. Tülle nach Anspruch 3, **dadurch gekennzeichnet, dass** der axiale Abstand gleich dem axialen Abstand zwischen einem Wellenkamm (41) und dem nächstliegenden Wellental (43) ist.

5. Tülle nach einem der Ansprüche 1 - 4, **dadurch gekennzeichnet, dass** das Schnappelement (46, 461, 462) axial innerhalb des Ortes des flexiblen Dichtungselements (94) der Tülle angeordnet ist, wenn die Tülle in der Installationsdose montiert ist.

6. Tülle nach einem der Ansprüche 1 - 5, **dadurch gekennzeichnet, dass** die innere Oberfläche (47) des Körpers (31) mit einem ersten flexiblen konischen Dichtungsring (81) versehen ist, der zum Inneren der Dose gerichtet ist, wenn er in der Dose montiert ist, wobei der erste flexible konische Dichtungsring (81) mit einer ersten Körperstufe (17) der Tülle verbunden ist.

7. Tülle nach Anspruch 6, **dadurch gekennzeichnet, dass** die innere Oberfläche (47) des Körpers (31) mit einem zweiten flexiblen konischen Dichtungsring (82) versehen ist, der zum Inneren der Dose gerichtet ist, wenn er in der Dose montiert ist, wobei der zweite flexible konische Dichtungsring (82) mit einer zweiten Körperstufe (18) der Tülle verbunden ist und einen kleineren Durchmesser als der erste flexible konische Dichtungsring (81) hat, wobei die zweite Körperstufe (18) einen kleineren Durchmesser als die erste Körperstufe (17) hat.

8. Tülle nach einem der Ansprüche 1 - 7, **dadurch gekennzeichnet, dass** der Körper (31) der Tülle mit einem Endverschluss (16) versehen ist, der an einer Körperstufe (17, 18, 19) der Tülle angebracht ist.

9. Tülle nach einem der Ansprüche 6 - 8, **dadurch gekennzeichnet, dass** die Körperstufe (17, 18, 19) mit einer Lösenut (85, 86, 87) an der äußeren Oberfläche (32) des Körpers (31) versehen ist.

10. Tülle nach einem der Ansprüche 1 - 9, **dadurch gekennzeichnet, dass** die äußere Oberfläche (32) des inneren Endes (83) des Körpers (31) zu einem leichten Anbringen der Tülle in dem Loch in der Installationsdose mit einem konisch geformten Oberflächenteil (35) gebildet ist.

## Revendications

1. Passe-câble (15) destiné à être fixé à un boîtier d'installation (11) pour câbles électriques, le passe-câble comprenant un corps en forme de bague cylindrique (31) comportant une surface extérieure (32) dotée d'une rainure (33) présentant une taille correspondant à la taille d'un bord d'un trou circulaire (34) formé dans le boîtier d'installation (11) pour le montage du passe-câble (15) dans ledit trou (34), et comportant une surface intérieure (47) comprenant un élément d'étanchéité souple (94) s'étendant vers un axe de symétrie (89) du corps (31) à partir de la surface intérieure (47) et conçu pour fixer une surface extérieure d'un conduit d'installation souple ondulé (20) inséré dans le passe-câble (15), **caractérisé en ce que** la surface intérieure (47) du passe-câble (15) est dotée d'un élément d'encliquetage (46, 461, 462) s'étendant au moins partiellement le long de la périphérie de la surface intérieure (47).

2. Passe-câble selon la revendication 1, **caractérisé en ce que** l'élément d'encliquetage (46, 461, 462) est composé d'un matériau élastique souple.

3. Passe-câble selon l'une quelconque des revendications 1 et 2, **caractérisé en ce que** l'élément d'encliquetage (46, 461, 462) est situé à une distance axiale de l'élément d'étanchéité souple (94) égale à la distance axiale entre une crête d'ondulation (41) et un creux d'ondulation (43) dudit conduit d'installation souple ondulé (20).

4. Passe-câble selon la revendication 3, **caractérisé en ce que** ladite distance axiale est égale à la distance axiale entre une crête d'ondulation (41) et le creux d'ondulation (43) le plus proche.

5. Passe-câble selon l'une quelconque des revendications 1 à 4, **caractérisé en ce que** l'élément d'encliquetage (46, 461, 462) est situé intérieurement sur le plan axial par rapport à l'emplacement de l'élément d'étanchéité souple (94) du passe-câble lorsque le passe-câble est monté dans le boîtier d'installation.

6. Passe-câble selon l'une quelconque des revendications 1 à 5, **caractérisé en ce que** la surface intérieure (47) du corps (31) est dotée d'une première bague d'étanchéité conique souple (81) orientée vers l'intérieur du boîtier lorsqu'elle est montée dans le boîtier, ladite première bague d'étanchéité conique souple (81) étant raccordée à un premier épaulement de corps (17) du passe-câble.

7. Passe-câble selon la revendication 6, **caractérisé en ce que** la surface intérieure (47) du corps (31) est dotée d'une deuxième bague d'étanchéité conique souple (82) orientée vers l'intérieur du boîtier lorsqu'elle est montée dans le boîtier, ladite deuxième bague d'étanchéité conique souple (82) étant raccordée à un deuxième épaulement de corps (18) du passe-câble, ladite deuxième bague d'étanchéité conique souple (82) présentant un diamètre inférieur à celui de la première bague d'étanchéité conique souple (81) et ledit deuxième épaulement de corps (18) présentant un diamètre inférieur à celui du premier épaulement de corps (17).

8. Passe-câble selon l'une quelconque des revendications 1 à 7, **caractérisé en ce que** le corps (31) du passe-câble est doté d'un élément de fermeture d'extrémité (16) fixé à un épaulement de corps (17, 18, 19) du passe-câble.

9. Passe-câble selon l'une quelconque des revendications 6 à 8, **caractérisé en ce que** l'épaulement de corps (17, 18, 19) est doté d'une rainure de détachement (85, 86, 87) sur la surface extérieure (32) du corps (31).

10. Passe-câble selon l'une quelconque des revendications 1 à 9, **caractérisé en ce que** la surface extérieure (32) de l'extrémité intérieure (83) du corps (31) est formée de façon à comporter une partie de surface (35) de forme conique permettant la fixation aisée du passe-câble dans le trou formé dans le boîtier d'installation.
